(19) Europäisches Patentamt
European Patent Office
Office européen des brevets

(11) Veröffentlichungsnummer: **0 146 892**
**B1**

(12) # EUROPÄISCHE PATENTSCHRIFT

(45) Veröffentlichungstag der Patentschrift: **25.02.87**

(51) Int. Cl.⁴: **C 08 K 5/53**, C 08 L 33/24, C 08 J 9/00

(21) Anmeldenummer: **84115455.2**

(22) Anmeldetag: **14.12.84**

(54) **Flammgeschützter Polyacryl- oder Polymethacrylimidschaumstoff und Verfahren zu seiner Herstellung.**

(30) Priorität: **21.12.83 DE 3346060**

(43) Veröffentlichungstag der Anmeldung: **03.07.85 Patentblatt 85/27**

(45) Bekanntmachung des Hinweises auf die Patenterteilung: **25.02.87 Patentblatt 87/9**

(84) Benannte Vertragsstaaten: **DE FR GB IT NL SE**

(56) Entgegenhaltungen:
**FR-A-2 107 935**
**FR-A-2 393 830**

(73) Patentinhaber: **Röhm GmbH, Kirschenallee Postfach 4242, D-6100 Darmstadt 1 (DE)**

(72) Erfinder: **Baumgartner, Ehrenfried, Dr., Reuterallee 44,, D-6100 Darmstadt (DE)**
Erfinder: **Besecke, Siegmund, Dr., Auf dem Kreuzberg 6, D-6104 Seeheim- Jugenheim (DE)**
Erfinder: **Gänzler, Wolfgang, Dr., Wixhäuser Strasse 11, D-6100 Darmstadt- Arheilgen (DE)**

**EP 0 146 892 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

## Beschreibung

### Gebiet der Erfindung

Die Erfindung betrifft flammgeschützte Polyacryl- oder Polymethacrylimidschaumstoffe, bestehend aus einem Polymerisat mit wiederkehrenden Einheiten der Struktur

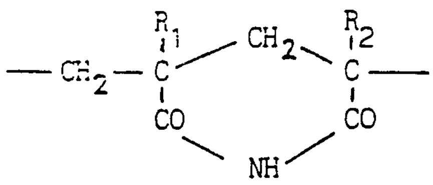

worin $R_1$ und $R_2$ jeweils ein Wasserstoffatom oder eine Methylgruppe bedeuten, oder einem Mischpolymerisat aus wenigstens 70 Gew.-% Einheiten der obigen Struktur und bis zu 30 Gew.-% Einheiten eines oder mehrerer anderer äthylenisch ungesättigter Comonomerer und wenigstens 1 Gew.-% Phosphor, der wenigstens zum Teil in Form einer organischen Phosphorverbindung vorliegt.

Polyacryl- bzw. Polymethacrylimidschaumstoffe zeichnen sich durch hohe Wärmeformbeständigkeit und Druckfestigkeit aus. Sie eignen sich hervorragend zur Herstellung von hoch belastbaren Verbundkörpern durch Aufbringen von faserverstärkten Deckschichten.

### Stand der Technik

Aus der DE-8 20 47 096 ist ein flammgegchützter Polymethacrylimidschaumstoff bekannt, der durch Erhitzen eines Mischpolymerisats aus Methacrylnitril, Methacrylsäure, Methylmethacrylat und Maleinsäureanhydrid mit einem Gehalt an Ameisensäure als Treibmittel und an Phosphorsäure und Dibrompropylphosphat als flammhemmenden Zusätzen hergestellt worden war. Beim Erhitzen auf 150 bis 250° cyclisieren die Methacrylnitril- und Methacrylsäureeinheiten zu Methacrylimideinheiten der oben angegebenen Struktur ($R_1$ = $R_2$ = $CH_3$). Der Phosphorgehalt des Schaumstoffes beträgt 1,5 bis 3 Gew.-%.

Nach dieser Druckschrift hergestellte Schaumstoffe sind unter der Handelsbezeichnung "Rohacell S"® in den Handel gekommen.

### Aufgabe und Lösung

Der Erfindung liegt die Aufgabe zugrunde, die Herstellung von flammgeschützten Polyacryl- und Polymethacrylimidschaumstoffen zu erleichtern und die Wasseraufnahme derartiger Schaumstoffe zu vermindern, jedoch die thermischen und mechanischen Eigenschaften im Vergleich zu nicht flammgeschütztem Poly(meth)acrylimidschaumstoffen nicht zu beeinträchtigen.

Es wurde gefunden, daß flammgegchützte Polyacryl- und Polymethacrylimidschaumstoffe der eingangs angegebenen Zusammensetzung diese Aufgabe erfüllen, wenn sie als organische Phosphorverbindung eine Verbindung der Struktur

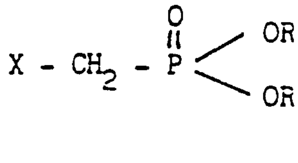

enthalten, worin R gleiche oder verschiedene Reste aus der Gruppe Methyl, Äthyl und Chlormethyl sind und X ein Wasserstoffoder Halogenatom, eine Hydroxylgruppe oder eine Gruppe RO-CO-ist.

**Vorteile und Anwendungsgebiete**

Die bekannten flammgeschützten Polymethacrylimidschaumstoffe enthalten freie Phosphorsäure als wesentlichen Bestandteil der flammhemmenden Zusätze. Sie sind dadurch sehr hydrophil und vermögen große Mengen Wasser aufzunehmen, wodurch ihre technologischen Eigenschaften erheblich beeinträchtigt werden. Die mechanischen Eigenschaften, z.B. die Druckfestigkeit bei höheren Temperaturen, werden nachhaltig verschlechtert. Eine ähnliche Wirkung üben organische Phosphonsäuren und andere stark polare organische Phosphorverbindungen aus. Selbst unpolare Phosshorverbindungen, wie Phosphotane, verursachen die gleichen Nachteile.

Ein weiterer Nachteil der meisten bisher verwendeten flammschützenden Zusätze tritt bei der Herstellung des schäumbaren Vorprodukts durch Polymerisatión von Vinylmonomeren in einer Hohlform, die in ein Wasserbad eingetaucht ist, in Erscheinung. Er beruht auf einer Verminderung der Haftung zwischen dem polymerisierenden, noch ungeschäumten Vorprodukt und den Formwänden aus Glas oder Metall, zwischen denen die Vorprodukte üblicherweise hergestellt werden. Das Vorprodukt löst sich während seiner Herstellung von den Formwänden ab, was wiederum andere Schwierigkeiten nach sich zieht. Aus nicht geklärten Gründen wird nämlich das Polymerisat im Bereich der Ablösungsstellen inhomogen, erkennbar an weißen Stellen, die beim Erhitzen nicht oder nur begrenzt aufschäumen. Inhomogenitäten mit der gleichen Folge entstehen auch an Stellen, wo Wasser in den durch Polymerisatablösung entstandenen Spalt eindringt. Schon eine oder wenige Ablösungsstellen können einen ganzen Polymerisatansatz unbrauchbar machen, weil aus dem inhomogenen Vorprodukt kein gleichmäßig geschäumtes Endprodukt mehr herstellbar ist.

Daraus mußte der Schluß gezogen werden, daß Phosphorverbindungen grundsätzlich sowohl die Wasseraufnahme erhöhen, als auch weichmachend wirken. Darüberhinaus scheinen sie zum größten Teil Polymerisationsprobleme der erwähnten Art hervorzurufen. Auch von stärker hydrophoben Phosphorverbindungen mit größeren aliphatischen oder aromatischen Resten war kein besseres Eigenschaftsbild zu erwarten, weil man von diesen Verbindungen wegen ihres geringeren Phosphorgehaltes entsprechend mehr einsetzen müßte, wobei ihre bekannte Weichmacherwirkung um so mehr in Erscheinung treten müßte. Umso überraschender war die Feststellung, daß die durch die Formel

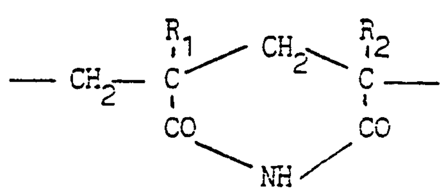

gekennzeichneten Phosphonsäureester die oben geschilderten Nachteile nicht herbeiführen, obwohl sie wasserlöslich sind und eine stark hydrophilierende Wirkung zu befürchten war. Dagegen ist ihre Klammhemmende Wirkung hervorragend.

Die vorteilhafte Wirkungskombination der genannten Phosphonsäureester zeigt sich beim Vergleich der Eigenschaften der neuen Schaumstoffe mit solchen, die a) keine flammhemmenden Zusätze, b) stank polare Phosphorverbindungen entsprechend Beispiel 8 der DE-PS 20 47 096, c) unpolare organische Phosphorverbindungen enthalten. Alle verglichenen Schaumstoffe hatten Dichten zwischen 50 und 60 kg/m$^3$ und eine vergleichbare Zusammensetzung des Basispolymerisats.

**Tabelle**

| | Schaumstoff-typ | Flammschutzmittel Art | Menge (Gew.%) | Brandeigenschaften nach FAR-Test 25.853a | Druckfestigkeit bei 180°C ($N/mm^2$) | Wasseraufnahme nach 50 Tagen (Vol.%) |
|---|---|---|---|---|---|---|
| | Erfindungsgemäße Schaumstoffe, hergestellt aus Mischpolymerisat von Methacrylsäure und Methacrylnitril (56:44 Gew.T.) mit 0,5 Gew.% Mg-Methacrylat; Alkohole als Treibmittel | Dimethylmethan phosphonat | 10 | bestanden | 0,38 | 21,2 |
| | | Alkoxycarbonylmethanphosphonsäurediäthylester | 15 | bestanden | 0,26 | 21,9 |
| a) | Schaumstoff nach DE 27 26 260, Polymerisatzusammensetzung wie oben | ohne | | nicht bestanden | 0,38 | 17 |
| b) | Schaumstoff nach DE 20 47 098, Beispiel 8 | Phosphorsäure | 10 | bestanden | 0,10 | 45 |
| | | Tris(dibrompropyl)phosphat | 5 | | | |
| c) | Schaumstoff wie nach Erfindung, jedoch anderes Flammschutzmittel | Phospholan | 10 | nicht bestanden | 0,10 | 56 |

Ebenso wie Phospholan erwiesen sind zahlreiche andere organische Phosphorverbindungen, die in anderen Fällen als flammhemmende zusätze wirksam sind, aus verschiedene Gründen als unbrauchbar, z.B. wegen unzureichender Löslichkeit, Störung der Polymerisation oder der Aufschäumung oder gegen unzureichender Flammschutzwirkung. Das gilt z.B. für Triphenylphosphin, -phosphinoxid, -phosphat, -phosphit, Benzolphosphonsäure und Propanphosphonsäure.

Ein weiterer überraschender Vorteil der erfindungsgemäß eingesetzten Phosphonsäureester liegt in der Vermeidung der Probleme, die sich aus der unzureichenden Haftung des Vorprodukts an den Wänden der Polymerisationsform ergeben. Das Vorprodukt läßt sich ebenso homogen herstellen wie in Abwesenheit von Flammschutzmitteln.

Der aus DE-PS 27 26 260 bekannte Zusatz eines Metallsalzes, wie Magnesiummethacrylat, der sonst zur Einstellung der Schaumstoffdichte dient, hat im vorliegenden Fall den zusätzlichen überraschenden Vorteil, daß er die Rauchentwicklung bei Feuereinwirkung auf die erfindungsgemäßen Schäumstoffe vermindert. Das gilt insbesondere für Metallsalzmengen über 1 Gew.-%, bezogen auf 100 Gew.-T. des Monomergemisches. Vorzugsweise werden mindestens 2 Gew.-% eingesetzt, in der Praxis meistens Mengen von 2 bis 5 Gew.-%. Überraschenderweise üben Maleinsäure, Itakonsäure und ihre Anhydride eine ähnliche Wirkung auf die

Rauchgasentwicklung aus wie die Metallsalze. Wegen ihres vorteilhaften Eigenschaftsbildes eignen sich die neuen Schaumstoffe im besonderen Maße zur Herstellung von Schichtwerkstoffen, die auf einem Kern aus dem Schaumstoff ein- oder beidseitig auflaminierte Deckschichten aus Metall, thermoplastischen oder duroplastischen Kunststoffen, gegebenenfalls mit verstärkenden Fasereinlagen, tragen. Ein bevorzugtes Verfahren zur Herstellung solcher Schichtwerkstoffe ist die sog. "Prepregtechnik"; vgl. DE-OS 28 22 884 und 28 22 885. Die Schichtwerkstoffe finden Anwendung beim Bau von leichten Konstruktionen, für die hohe Anforderungen der Brandsicherheit gelten, wie im Fahrzeug-, Flugzeug- und Schiffsbau und der Raumfahrttechnik.

**Herstellung der neuen Schaumstoffe**

Polyacryl- und Polymethacrylimidschaumstoffe werden durch mehrstündiges Erhitzen eines meist tafelförmigen Vorproduktes auf 150 bis 250°C erzeugt. Es entstehen Schaumstoffe mit einem Raumgewicht zwischen 20 und 500 kg/$m^3$. Alle für die Schaumstoffeigenschaften erforderlichen Zusatzstoffe werden bereits in das tafelförmige Vorprodukt eingearbeitet, in der Regel durch Zugabe der Zusatzstoffe zu einem Gemisch aus Acryl- bzw. Methacrylmonomeren und Treibmitteln, aus dem durch radikalische Polymerisation das Vorprodukt entsteht.

Die charakteristischen wiederkenrenden Einheiten der Polymerisate oder Mischpolymerisate, aus denen die Kunststoffmatrix der Schaumstoffe besteht, haben die Struktur eines cyclischen Imids

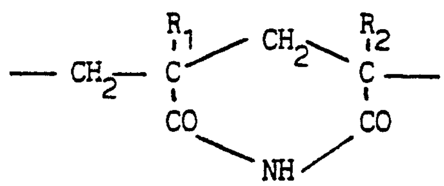

worin $R_1$ und $R_2$ jeweils ein Wasserstoffatom oder eine Methylgruppe bedeuten. Wenn dem Polymerisat Acrylmonomere zugrundeliegen, sind $R_1$ und $R_2$ Wasserstoffatome. Bevorzugt werden jedoch Methacrylmonomere eingesetzt, die zu Methacrylimideinheiten mit $R_1 = R_2 = CH_3$ führen. Gemischte Imideinheiten mit $R_1 = H$ und $R_2 = CH_3$ oder $R_1 = CH_3$ und $R_2 = H$ entstehen beim gleichzeitigen Einsatz von Acryl- und Methacrylmonomeren.

Die verschiedenen polymeranalogen Reaktionen, die zur Bildung der genannten Imideinheiten führen können, sind in der DE-PS 18 17 156 ausführlich dargestellt worden. Unter diesen hat die intramolekulare Cyclisierung von Mischpolymerisaten aus Acryl-oder Methacrylsäure und Acryl- oder Methacrylnitril die größte technische Bedeutung. Die nachfolgenden Ausführungen beziehen sich daher überwiegend auf die Herstellung der Schaumstoffe aus derartigen Monomerengemischen, jedoch lassen sie sich in entsprechender Weise auf andere Monomerengemische, die zu imidisierbaren Vorprodukten führen, übertragen. Diese Gemische enthalten beispielsweise Einheiten des Acryl- oder Methacrylamids anstelle von Acryl- oder Methacrylnitril. Vorzugsweise liegen den Schaumstoffen Monomerengemische zugrunde, die wenigstens 20 Gew.% (bezogen auf das Gesamtgewicht der Monomeren) Acryl- und/oder Methacrylsäure neben einem oder mehrere anderen ungesättigten Monomeren enthalten. Besonders bevorzugte Monomerengemische sind aus Acryl- oder/und Methacrylsäure und Acryl- oder/und Methacrylnitril in einem Molverhältnis zwischen 2: 3 und 3: 2 zusammengesetzt.

Da die Umwandlung der polymerisierten Monomeren in Acryl- oder Methacrylimidgruppen während des Erhitzens des Vorsproduktes und des Aufschäumens nicht immer vollständig abläuft, enthalten die Polymerisate bzw. Mischpolymerisate, aus denen der Schaumstoff aufgebaut ist, häufig geringe Anteile der ursprünglichen Monomereinheiten. Weitere nicht imidartige Einheiten können von zusätzlich mitverwendeten Comonomeren stammen, deren polymerisierte Einheiten schwerer oder gar nicht in cyclische Imidgruppen überführbar sind. Dazu gehören z.B. die Ester der Acryl- oder Methacrylsäure, insbesondere mit niederen Alkoholen (1 bis 4 C-Atome), Styrol, Maleinsäure oder deren Anhydrid, Itakonsäure oder deren Anhydrid, Vinylpyrrolidon Vinylchlorid, Vinylidenchlorid usw. Der Anteil der nicht imidartigen Comonomereinheiten soll 30 Gew.% vorzugsweise 10 Gew.% nicht übersteigen.

Zum Aufschäumen des Vorprodukts während der Umwandlung in ein imidgruppenhaltiges Polymer dienen Treibmittel, die bei 150 bis 250°C durch Zersetzung oder Verdampfung eine Gasphase bilden. Treibmittel mit Amidstruktur, wie Harnstoff, Monomethyl- oder N,N'-Dimethylharnstoff, Formamid oder Monomethylformamid, setzen beim Zerfall Ammoniak oder Amine frei, die sich mit dem Polymerisat unter

Bildung von Imidgruppen umsetzen können. Daher braucht das Monomerengemisch nicht in jedem Fall so zusammengesetzt zu sein, daß es vollständig in Poly(meth)acrylimid überführbar ist, sondern es kann z.B. ein stöchiometrischer Überschuß von Acryl- oder Methacrylsäure vorliegen. Selbst Homopolymerisate der Acryl- oder Methacrylsäure lassen sich bei ausreichendem Einsatz der genannten Treibmittel mit Amidstruktur vollständig zu Poly(meth)acrylimid umsetzen. Sofern die Mitwirkung des Treibgases an der Imidbildung nicht erforderlich ist, können stickstofffreie Treibmittel, z.B. Ameisensäure, Wasser oder einwertige aliphatische Alkohole mit 3 bis 8 C-Atomen, wie Propanol-1, Propanol-2, Butanol-1, tert.Butanol, Butanol-2, Isobutanol, Pentanole, Hexanole, usw. eingesetzt werden. Die Treibmittelmenge richtet sich nach der gewünschten Schaumstoffdichte und liegt im allgemeinen zwischen 2 und 15 Gew.Teilen je 100 Gew.Teile der Monomeren. Als Metallsalzzusätze, die gleichzeitig rauchgasmindernd wirken, können dem Monomerengemisch ein Metallacrylat oder -methacrylat, z. B. die Acrylate oder Methacrylate der Alkali- oder Erdalkalimetalle oder des Zinks oder Zirkons oder Bleis oder andere Verbindungen der genannten Metalle, sofern sie in dem Monomerenansatz löslich sind, zugesetzt werden. Bevorzugt sind Na-, K-, Zn-, Mg- und Ca-Acrylat und -Methacrylat. Mengen von 2 bis 5 Gew. Teile der Monomeren bewirken eine deutliche Minderung der Rauchgasdichte bei der Brandprüfung gemäß FAR 25.853a.

Das Monomerengemisch enthält weiterhin einen radikalbildenden Initiator, wie Dibenzoylperoxid oder Azobisisobutyronitril, und wird vorzugsweise bei Temperaturen von 35 bis 120° polymerisiert. Zweckmäßig ist die Polymerisation in Form von 1 bis 3 cm dicken Platten, die sich bei 150 bis 250° C zu entsprechend größeren Schaumstoffplatten expandieren lassen.

**Die flammschützenden Zusätze**

Für die flammhemmenden Eigenschaften des Schaumstoffes ist sein Gesamtgehalt an Phosphor von entscheidender Bedeutung. Er soll wenigstens 1 Gew.%, bezogen auf das Gesamtgewicht des Schaumstoffes, betragen und liegt vorzugsweise zwischen 1,5 und 5 Gew.%.

Bei Flammeneinwirkung bildet sich an der Oberfläche des Polymerisats eine vermutlich aus Phosphoroxiden bestehende Schicht, die den weiteren Luftzutritt hemmt und dadurch die Verbrennung hindert. Da alle Phosphorverbindungen bei Flammeneinwirkung in die gleichen Phosphoroxide übergehen, ist die chemische Natur des eingebrachten Phosphors von geringerer Bedeutung für das Brandverhalten als der Gesamtgehalt an Phosphor. Die Wahl des phosphorhaltigen Flammschutzmittels richtet sich daher in erster Linie nach seiner Auswirkung auf die Herstellbarkeitung die Eigenschaften des Schaumstoffes.

Die erfindungsgemäß als Flammschutzmittel eingesetzen Phoshonsäureester können gemeinsam mit anderen Flammschutzmitteln eingesetzt werden, sofern sich diese nicht nachteilig auf die Schaumstoffeigenschaften auswirken. Beispielsweise kann roter Phosphor mitverwendet werden, der sich durch einen Zusatz von hochdisperser Kieselsäure in dem flüssigen Monomerengemisch gleichmäßig dispergieren läßt. Obwohl er weder hydrophilierend noch weichmachend wirkt, hat sich roter Phosphor als alleiniges Flammschutzmittel in Poly(meth)acrylimidschaumstoffen weniger gut bewährt als in dem Monomergemisch lösliche organische Phosphorverbindungen. Roter Phosphor kann jedoch in Kombination mit diesem angewendet werden. Da die meisten anorganischen oder organischen Phosphorverbindungen entweder hydrophilierend oder weichmachend wirken, lassen sie sich höchstens in geringer, allein nicht ausreichender Menge als Flammschutzmittel neben den beanspruchten Phosphonsäureestern einsetzen. Diese enthalten in der Regel wenigstens die Hälfte, vorzugsweise 70 bis 100 % des in dem Schaumstoff enthaltenen Phosphors.

Die charakteristische Eigenschaft der erfindungsgemäß eingesetzten Phosphonsäureester ist ihr überraschend geringer Einfluß auf die Druckfestigkeit der Schaumstoffmatrix, insbesondere bei hohen Temperaturen. Eine denkbare Erklärung für dieses Verhalten konnte darin liegen, daß diese Ester zwar mit dem Polymerisat des Vorproduktes, aber nicht mehr mit dem imidisierten Polymerisat verträglich sind und in die Schaumstoffporen ausgeschwitzt werden. Diese Unverträglichkeit dürfte auf das Fehlen längerer aliphatischer Reste oder auf die verhältnismäßig stark polaren organischen Reste des Phosphonsäureteils zurückzuführen sein. Jedoch soll die Erfindung nicht auf diese Bedeutung festgelegt werden.

Als Flammschutzmittel der Formel $XCH_2$-$PO(OR)_2$ werden die Methyl-, Chlormethyl- oder Äthylester der Methan-, Chlormethan-, Hydroxymethanphosphonsäure oder der Methoxy-, Äthoxy- oder Chlormethoxycarbonylmethanphosphonsäure eingesetzt. Der weichmachende Einfluß ist bei den Methylestern der Methanphosphonsäure und der Methoxycarbonyl- bzw. Ethoxycarbonylmethanphosphonsäure am geringsten, weshalb diese Ester bevorzugt sind.

Obwohl Halogenatome die flammhemmende Wirkung noch verstärken, können sie im Brandfalle giftige und stark korrodierende Gase bilden, die im Katastrophenfalle eine zusätzliche Gefahr bilden. Aus diesem Grunde werden halogenfreie Flammschutzmittel in den erfindungsgemäßen Schaumstoffen bevorzugt. Chlormethylester und die Ester der Chlormethyl-Phosphonsäure sind daher trotz ihrer technologisch günstigen Wirkung in den bevorzugten Schaumstoffen der Erfindung nicht enthalten. Die Flammschutzmittel werden wie die übrigen Zusätze in den flüssigen Monomerenansatz eingebracht. Die erfindungsgemäßen Phosphonsäureester sind in den in Betracht kommenden Monomerengemischen löslich und stören die Polymerisation nicht. Es wird angenommen, daß sie während der Polymerisation unverändert bleiben.

Die Polymersation kann in einer Form mit Formwänder aus Glas oder Metall durch geführt werden. Die Form kann während der Polymerzation in ein Wasserbad eingetaucht werden.

**Beispiele 1-5**

Zu einem Gemisch aus gleichen Mol-Teilen an Methacrylsäure und Methacrylnitril (56,2: 43,8 Gew.-Tl.) wurden als Treibmittel 3 Gew.Tl. Isopropanol und 1 Gew.Tl. tert.-Butanol, als Initiatoren 0,05 Gew.Tl. tert.-Butylperpivalat und 0,1 Gew.Tl. Dibenzoylperoxid zugesetzt. Verschiedene Flammschutzmittel wurden in Mengen von 10 - 15 Gew Tl und Mg-dimethacrylat zwischen 0 - 0,5 Gew.T1. zugesetzt; siehe Tabelle 1.

Diese Mischungen wurden bei 40°C in einer aus zwei Glasplatten der Größe 50 x 50 cm und einer 2,2 cm dicken Randabdichtung gebildeten Kammer polymerisiert und nach dem Tempern bei 100°C 3 Stunden bei 170 - 220°C geschäumt. Als Flammschutzmittel wurden Verbindungen der Formel

$$X - CH_2 - \overset{\overset{\displaystyle O}{\|}}{P} - (OR)_2$$

eingesetzt.

**Tabelle 1**: Zusammensetzung der Polymerisationsansätze

| Beispiel | Flammschutzmittel $XCH_2PO(OR)_2$ X | R | Menge [Gew.Tle.] | Methacrylsäure [Gew.Tle.] | Methacrylnitril [Gew.Tle.] | Isopropanol [Gew.Tle.] | tert.Butanol [Gew.Tle.] | Mg-dimethacrylat [Gew.Tle.] |
|---|---|---|---|---|---|---|---|---|
| 1 | H | $CH_3$ | 10 | 56,2 | 43,8 | 3 | 1 | 0,5 |
| 2 | $-CO-O-C_2H_5$ | $C_2H_5$ | 15 | 56,2 | 43,8 | 3 | 1 | 0,5 |
| **Vergleichs-Versuche** | **Andere Flammschutzmittel Bezeichnung** | | **Menge [Gew.Tle.]** | | | | | |
| 3 | Phospholan ** | | 10 | 56,2 | 43,8 | 3 | 1 | 0,5 |
| 4 | ohne | | - | 56,2 | 43,8 | 3 | 1 | 0,5 |
| 5 | ohne | | - | 70 | 30 | 8,2* | - | - |

* = Formamid

** = 2-Methyl-2,5-dioxo-1-oxa-2-phospholan

**Tabelle 2**: Schäumbedingungen

| Beispiel | Schäumtemperatur [°C] | Schäumzeit [h] | Schaumdichte [mg/m$^3$] |
|---|---|---|---|
| 1 | 200°C | 3 | 50 - 60 |
| 2 | 200°C | 3 | 50 - 60 |
| 3 | 200°C | 3 | 50 - 60 |
| 4 | 220°C | 3 | 50 - 60 |
| 5 | 190°C | 3 | 50 - 60 |

**Tabelle 3**: Eigenschaften

| Beispiel | Druckfestigkeit bei 23°C [N/mm$^2$] | Druckfestigkeit bei 180°C [N/mm$^2$] | Wärmeformbeständigkeit [°C] | Wasseraufnahme nach 7 Tagen unter Wasser [Gew.%] |
|---|---|---|---|---|
| 1 | 1,07 | 0,38 | 200 | 93,4 |
| 2 | 0,78 | 0,26 | 187 | 108 |
| 3 | 0,55 | < 0,05 | 185 | 498 |
| 4 | 0,82 | 0,38 | 205 | 100 |
| 5 | 0,8 | < 0,05 | 175-180 | 80-120 |

**Tabelle 4**: Flammschutzeigenschaften der Schaumstoffe nach Beispielen 1 bis 8

| Beispiel | FAR-Test 25.853a (max. Abbrandlänge < 150 mm) | Rauchgasdichte-Test ($D_s$ nach 4 Min < 200) ohne Beflammung | mit Beflammung |
|---|---|---|---|
| 1 | 116 mm - bestanden | 114 - bestanden | 222 - nicht bestanden |
| 2 | 104 mm - bestanden | 69 - bestanden | 139 - bestanden |
| 3 (Vergleich) | 152 mm - nicht bestanden | (66) | (209) |
| 4 (Vergleich) | abgebrannt | | |
| 5 (Vergleich) | abgebrannt | | |
| 6 | | 81 - bestanden | 190 - bestanden |
| 7 | | 95 - bestanden | 172 - bestanden |
| 8 | 101 - bestanden | 127 - bestanden | 185 - bestanden |

**Beispiele 6-8**

Unter den in Beispiel 1 angegebenen Bedingungen wurden Gemische polymerisiert, die sich von dem Gemisch gemäß Beispiel 1 wie folgt unterscheiden:

Beispiel 6: zusätzlich 1 Gew.Tl. Zink-dimethacrylat

Beispiel 7: zusätzlich 1 Gew.Tl. Maleinsäure

Beispiel 8: 4 Gew.Tle. Harnstoff, 2 Gew.Tle. Isopropanol, 0,25 Gew.Tle. Alkylmethacrylat statt tert.-Butanol/Isopropanol-Gemisch.

Die erhaltenen Schaumstoffe hatten folgende Raumgewichte: Beispiel 8:56 kg/m$^3$; Beispiel 7: 50 kg/m$^3$; Beispiel 6: 52 kg/m$^3$.

**Beispiele 9-23**

Die nachfolgenden Beispiele zeigen die Verminderung der Rauchgasdichte $D_s$ bei Beflammung in Anlehnung an den FAR-Test 25.853a, bezogen auf das Raumgewicht. Bei Schaumstoffen gleicher Zusammensetzung nimmt die Rauchgasdichte proportional zum Raumgewicht zu. Daher ist bei Schaumstoffen mit rauchgasmindernden Zusätzen als Vergleichswert ein Schaumstoff gleichen Raumgewichts ohne den Zusatz, jedoch sonst gleicher Zusammensetzung zugrundezulegen. Eine Verbesserung der Rauchgasdichte ist in der Graphik, in der die Rauchgasdichte $D_s$ über dem Raumgewicht aufgetragen ist, für alle Beispiele zu erkennen, deren Rauchgasdichte-Wert unterhalb der Geraden liegen, die durch die zusatzfreien Beispiele 9 und 10 festgelegt ist.

Die Standard-Schaumstoffe (Beispiele 9 und 10) wurden hergestellt durch Polymerisation eines Gemisches aus:

56,2 Gew.Teilen Methacrylsäure
43,8 Gew.Teilen Methacrylnitril
0,5 Gew.Teilen Magnesium-dimethacrylat
0,2 Gew.Teilen Allylmethacrylat
3,0 Gew.Teilen tert. Butanol
1,0 Gew.Teilen Isopropanol
0,2 Gew.Teilen tert. Butylperpivalat
0,05 Gew.Teilen Dibenzoylperoxid
10 Gew.Teilen Dimethylmethanphosphonat

Zur Polymerisation wurden die Gemische in zugeschmolzenen Glasampullen 20 Std. auf 50°C, 3 Std. auf 60 bis 100°C, und 3 Std. auf 100°C erhitzt. Zwei Proben des Polymerisats wurden je 2 Std. auf 210°C bzw. 225°C erhitzt, wobei Schaumstoffe mit Raumgewichten von 97 bzw. 52 kg/m$^3$ entstanden.

Bei den Beispielen 11 bis 23 wurde in gleicher Weise gearbeitet, jedoch rauchgasmindernde Zusätze gemäß nachfolgender Tabelle 5 mitverwendet. Die Schäumtemperaturen lagen in allen Fällen zwischen 200 und 230°C. Das Raumgewicht und die Rauchgasdichte, ermittelt unter Anwendung der Meßmethodik des FAR-Tests 25.853a, sind in der Tabelle 5 gleichfalls angegeben. Die Werte sind in der Graphik aufgetragen. (MAS bedeutet das Anion der Methacrylsäure, acac das Anion des Acetylacetonats).

| Beispiel | Rauchgasmindernder Zusatz | | Raumgewicht | Rauchgasdichte |
|---|---|---|---|---|
| | Art | Menge (Gew.Teile) | [$kg/m^3$] | $D_s$ |
| 9 | ohne | - | 97 | 73 |
| 10 | ohne | - | 52 | 39 |
| 11 | Na-MAS | 2 | 84 | 46 |
| 12 | Na-MAS | 5 | 85 | 37 |
| 13 | Mg-MAS | 2 | 76 | 51 |
| 14 | Ca-$(MAS)_2$ | 2 | 91 | 54 |
| 15 | Ca-$(MAS)_2$ | 5 | 64 | 37 |
| 16 | Zn-$(MAS)_2$ | 2 | 68 | 40 |
| 17 | $Zn(acac)_2$ | 2 | 86 | 55 |
| 18 | $Zn(acac)_2$ | 5 | 67 | 43 |
| 19 | Zn-acetat | 2 | 76 | 42 |
| 20 | Zn-nitrat | 2 | 33 | 14 |
| 21 | Pb-tetraphenyl | 1 | 73 | 54 |
| 22 | Maleinsäure | 5 | 44 | 28 |
| 23 | Itakonsäure-anhydrid | 5 | 32 | 26 |

**Patentansprüche**

1. Polyacryl- oder Polymethacrylimidschaumstoff, bestehend aus einem Polymerisat mit wiederkehrenden Einheiten der Struktur

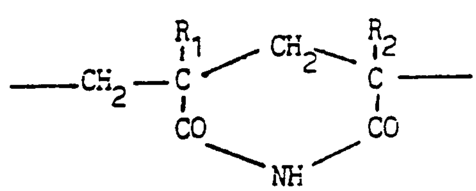

worin $R_1$ und $R_2$ jeweils ein Wasserstoffatom oder eine Methylgruppe bedeuten, oder aus einem Mischpolymerisat aus wenigstens 70 Gew.% Einheiten der obigen Struktur und bis zu 30 Gew.% Einheiten eines oder mehrerer anderer äthylenisch ungesättigter Comonomerer und wenigstens 1 Gew.% Phosphor, der wenigstens zum Teil in Form einer organischen Phosphorverbindung vorliegt,

dadurch gekennzeichnet,

daß die organische Phosphorverbindung die Struktur

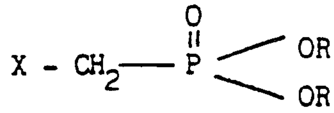

hat, worin R gleiche oder verschiedene Reste aus der Gruppe Methyl, Äthyl und Chlormethyl sind und X ein Wasserstoff- oder Halogenatom, eine Hydroxylgruppe oder eine Gruppe RO-CO- ist.

2. Polyacryl- oder Polymethacrylimidschaumstoff nach Anspruch 1, dadurch gekennzeichnet, daß das Mischpolymerisat Einheiten eines Metallacrylats oder -methacrylats enthält.

3. Polyacryl- oder Polymethacrylimidschaumstoff nach Anspruch 2, dadurch gekennzeichnet, daß sich das Metallacrylat oder -methacrylat von einem Alkali- oder Erdalkalimetall oder Zink oder Blei oder Zirkon ableitet.

4. Polyacryl- oder Polymethacrylimidschaumstoff nach Anspruch 3, dadurch gekennzeichnet, daß sich das Metallacrylat oder -methacrylat von den Metallen Na, K, Mg oder Ca ableitet.

5. Polyacryl- oder Polymethacrylimidschaumstoff, nach den Ansprüchen 1 bis 4, dadurch gekennzeichnet, daß am Aufbau des Mischpolymerisats Maleinsäure, Itakonsäure oder deren Anhydride beteiligt sind.

6. Polyacryl- oder Polymethacrylimidschaumstoff nach den Ansprüchen 1 bis 5, dadurch gekennzeichnet, daß er halogenfreie organische Phosphorverbindungen enthält.

7. Polyacryl- oder Polymethacrylimidschaumstoff nach den Ansprüchen 1 bis 6, dadurch gekennzeichnet, daß die organische Phosphorverbindung die formelmäßig angegebene Struktur hat, worin X die Gruppe $CH_3O$-CO- oder $C_2H_5O$-CO-oder ein Wasserstoffatom ist.

8. Verfahren zur Herstellung des Polyacryl- oder Polymethacrylimidschaumstoffes nach den Ansprüchen 1 bis 7, durch radikalische Polymerisation eines aus mindestens 20 Gew.% Acryl- und/oder Methacrylsäure, einem oder mehreren anderen äthylenisch ungesättigten Comonomeren, einem in dem Monomerengemisch löslichen, bei 150 bis 250°C durch Zerfall oder Verdampfung gasbildenden Treibmittel, wenigstens 1 Gew.% Phosphor, der wenigstens zum Teil in Form einer gelösten organischen Phosphorverbindung vorliegt, Erhitzen des entstandenen Polymerisats auf 150 bis 250°C bis zur Bildung eines Schaumstoffes, wobei die Comonomeren und die Treibmittel so gewählt werden, daß beim Erhitzen des gebildeten Polymerisats wenigstens 70 Gew.%, bezogen auf das Polymerisatgewicht, an wiederkehrende Einheiten der Struktur

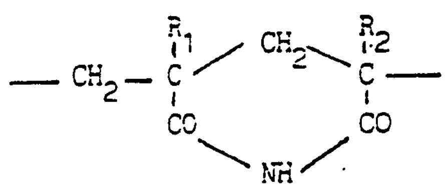

worin $R_1$ und $R_2$ jeweils ein Wasserstoffatom oder eine Methylgruppe bedeuten, gebildet werden,
dadurch gekennzeichnet,
daß eine organische Phosphorverbindung der Struktur

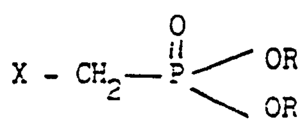

eingesetzt wird, worin X und R die in Anspruch 1 angegebene Bedeutung haben.

9. Verfahren nach Anspruch 8, dadurch gekennzeichnet, daß die Polymerisation in einer Form mit Formwänden aus Glas oder Metall durchgeführt wird.

10. Verfahren nach Anspruch 9, dadurch gekennzeichnet, daß die Form während der Polymerisation in ein Wasserbad eingetaucht wird.

11. Verfahren nach den Ansprüchen 8 bis 10, dadurch gekennzeichnet, daß als Treibmittel Harnstoff oder Formamid verwendet bzw. mitverwendet werden.

**Claims**

1. Polyacrylimide or polymethacrylimide foam, consisting of a polymer with recurring units of the structure

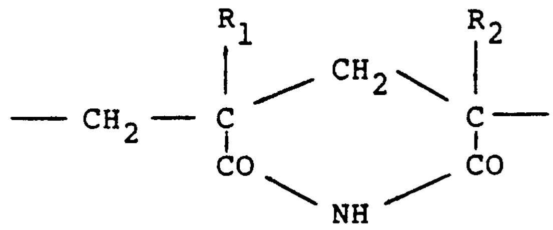

wherein $R_1$ and $R_2$ each represent a hydrogen atom or a methyl group, or of a copolymer made up of at least 70% by weight of units having the above structure and up to 30% by weight of units of one or more other ethylenically unsaturated comonomers and at least 1% by weight of phosphorus which is present at least partly in the form of an organic phosphorus compound, characterised in that the organic phosphorus compound has the structure

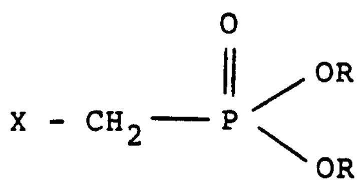

wherein R represents identical or different groups selected from the group comprising methyl, ethyl and chloromethyl and X represents a hydrogen or halogen atom, a hydroxyl group or a group RO-CO-.

2. Polyacrylimide or polymethacrylimide foam as claimed in claim 1, characterised in that the copolymer contains units of a metal acrylate or methacrylate.

3. Polyacrylimide or polymethacrylimide foam as claimed in claim 2, characterised in that the metal acrylate or methacrylate is derived from an alkali or alkaline earth metal or zinc or lead or zirconium.

4. Polyacrylimide or polymethacrylimide foam as claimed in claim 3, characterised in that the metal acrylate or methacrylate is derived from the metals Na, K, Mg or Ca.

5. Polyacrylimide or polymethacrylimide foam as claimed in claims 1 to 4, characterised in that maleic acid, itaconic acid or the anhydrides thereof participate in the structure of the copolymer.

6. Polyacrylimide or polymethacrylimide foam as claimed in claims 1 to 5, characterised in that it contains halogen-free organic phosphorus compounds.

7. Polyacrylimide or polymethacrylimide foam as claimed in claims 1 to 5, characterised in that the organic phosphorus compound has the structure shown in the formula, wherein X represents the group $CH_3O$-CO- or $C_2H_5O$-CO- or a hydrogen atom.

8. Process for preparing the polyacrylimide or polymethacrylimide foam as claimed in claims 1 to 7, by radical polymerisation of a monomer mixture consisting of at least 20% by weight of acrylic and/or methacrylic acid, one or more other ethylenically unsaturated comonomers, a propellant which is soluble in the monomer mixture and which forms gas at 150 to 250°C by decomposition or evaporation, at least 1% by weight of phosphorus which is present at least partially in the form of a dissolved organic phosphorus compound, heating the resulting polymer to 150 to 250°C until a foam is formed, the comonomers and propellants being selected so that when the polymer formed is heated at least 70% by weight, based on the weight of polymer, of recurring units having the structure

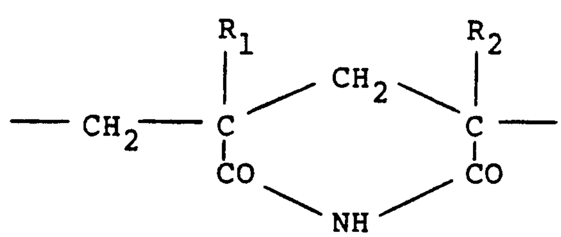

wherein $R_1$ and $R_2$ each represent a hydrogen atom or a methyl group, are formed, characterised in that an organic phosphorus compound of the structure

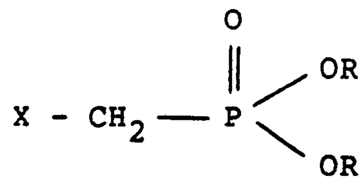

is used, wherein X and R have the meanings given in claim 1.

9. Process as claimed in claim 8, characterised in that the polymerisation is carried out in a mould having walls of glass or metal.

10. Process as claimed in claim 9, characterised in that the mould is immersed in a water bath during polymerisation.

11. Process as claimed in claims 8 to 10, characterised in that urea or formamide is used or additionally used as propellant.

**Revendications**

1. Mousse de polyacrylimide ou de polyméthacrylimide, formée d'un produit de polymerisation à unités répétitives de structure

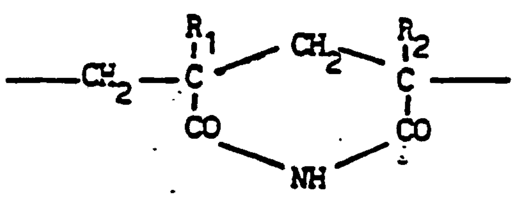

dans laquelle $R_1$ et $R_2$ représentent chacun un atome d'hydrogène ou un groupe méthyle, ou d'un produit de copolymérisation d'au moins 70 % en poids d'unités ayant la structure ci-dessus et de 30 % en poids au maximum d'unités d'un ou de plusieurs autres comonomères à insaturation ethylénique, et d'au moins 1 % en poids de phosphore qui se présente, au moins en partie, sous la forme d'un composé organique du phosphore, caractérisée en ce que le composé organique du phosphore a la structure

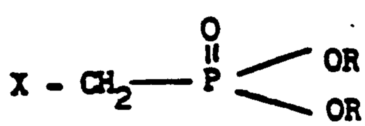

dans laquelle les symboles R designent des radicaux identiques ou différents du groupe méthyle, éthyle et chlorométhyle et X est un atome d'hydrogène ou d'halogène, un groupe hydroxyle ou un groupement RO-CO-.

2. Mousse de polyacrylimide ou de polyméthacrylimide selon la revendication 1, caractérisée en ce que le produit de copolymerisation contient des unites d'un acrylate ou méthacrylate de métal.

3. Mousse de polyacrylimide ou de polyméthacrylimide selon la revendication 2, caractérisée en ce que l'acrylate ou methacrylate de métal dérive d'un métal alcalin ou alcalinoterreux, du zinc, du plomb ou du zirconium.

4. Mousse de polyacrylimide ou de polyméthacrylimide selon la revendication 3, caractérisée en ce que l'acrylate ou méthacrylate de métal dérive des métaux Na, K, Mg ou Ca.

5. Mousse de polyacrylimide ou de polyméthacrylimide selon l'une quelconque des revendications 1 à 4, caractérisée en ce que l'acide maléique, l'acide itaconique ou leurs anhydrides participent à la constitution du produit de copolymérisation.

6. Mousse de polyacrylimide ou de polyméthacrylimide selon l'une quelconque des revendications 1 à 5, caractérisée en ce qu'elle contient des composés organiques du phosphore exempts d'halogène.

7. Mousse de polyacrylimide ou de polyméthacrylimide selon l'une quelconque des revendications 1 à 6, caractérisée en ce que le composé organique du phosphore a la structure indiquée par la formule, dans laquelle X est le groupement $CH_3CO$- ou $C_2H_5O$-CO- ou un atome d'hydrogène.

8. Procédé de préparation de la mousse de polyacrylimide ou de polyméthacrylimide selon l'une quelconque des revendications 1 à 7, par polymérisation radicalaire d'un mélange composé d'au moins 20 % en poids

d'acide acrylique et/ou méthacrylique, d'un ou de plusieurs autres comonomères à insaturation éthylénique, d'un agent moussant qui est soluble dans le mélange de monomères et produit un gaz par décomposition ou vaporisation a une temperature de 150 à 250° C et d'au moins 1 % en poids de phosphore qui se présente au moins en partie sous la forme d'un composé organique du phosphore dissous, chauffage du produit de polymérisation formé à une température de 150 à 250° C jusqu'à la formation d'une mousse, les comonomères et les agents moussants étant choisis de telle manière qu'au chauffage du produit de polymérisation obtenu, il soit formé au moins 70 % en poids, sur la base du poids du produit de polymérisation, d'unités répétitives de structure

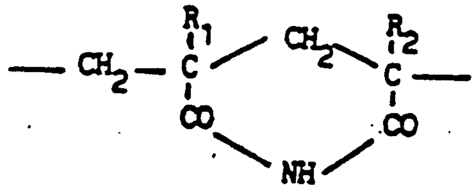

dans laquelle $R_1$ et $R_2$ representent chacun un atome d'hydrogène ou un groupe méthyle, caractérisé en ce qu'il est utilisé un composé organique du phosphore de structure

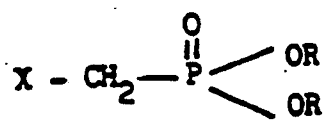

dans laquelle X et R ont les significations données dans la revendication 1.

9. Procédé selon la revendication 8, caractérisé en ce que la polymérisation est effectuée dans un moule à parois de verre ou de métal.

10. Procédé selon la revendication 9, caractérisé en ce que le moule est plongé dans un bain-marie pendant la polymérisation.

11. Procédé selon l'une quelconque des revendications 8 à 10, caractérisé en ce qu'il est utilisé ou utilisé simultanément, en tant qu'agent moussant, de l'urée ou du formamide.

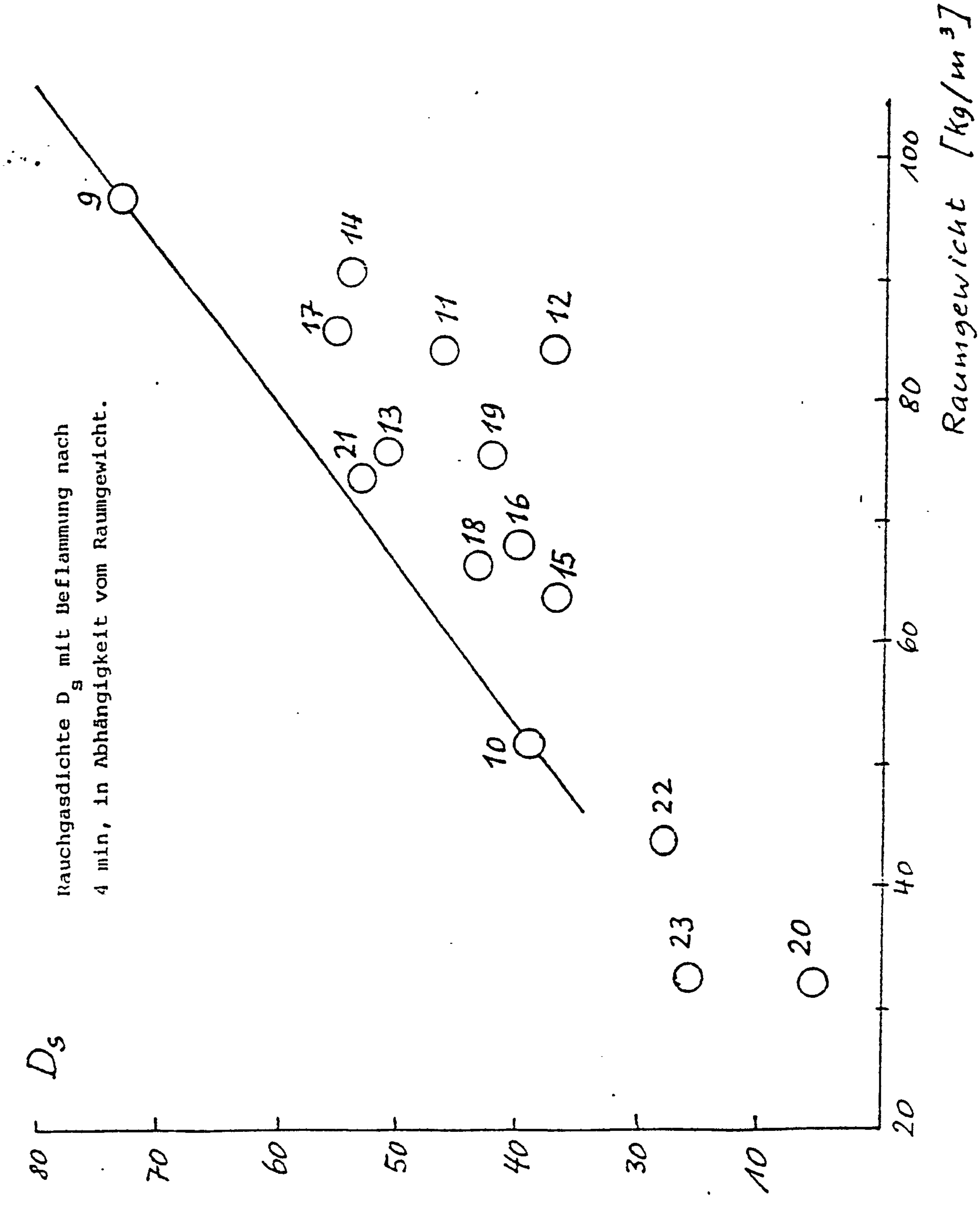
Rauchgasdichte $D_s$ mit Beflammung nach 4 min, in Abhängigkeit vom Raumgewicht.
$D_s$
Raumgewicht [kg/m³]